# EUROPÄISCHE PATENTSCHRIFT

(11) **EP 1 714 049 B1**
(45) Veröffentlichungstag und Bekanntmachung des Hinweises auf die Patenterteilung: **05.08.2009**
(21) Anmeldenummer: 04803668.5
(22) Anmeldetag: 09.12.2004
(51) Int. Cl.: F16D 65/38, F16D 65/18

(54) **PNEUMATISCH BESTÄTIGTE SCHEIBENBREMSE MIT ELEKTROMOTORISCHEN NACHSTELLVORRICHTUNGEN UND VERFAHREN ZUR ANSTEUERUNG DER SCHEIBENBREMSE**
PNEUMATICALLY ACTUATED DISK BRAKE WITH ELECTROMOTIVE ADJUSTING DEVICES AND METHOD FOR CONTROLLING THE DISK BRAKE
FREINS A DISQUE A ACTIONNEMENT PNEUMATIQUE COMPRENANT DES DISPOSITIFS DE REGLAGE ELECTROMOTEURS, ET PROCEDE POUR COMMANDER LE FREIN A DISQUE

(30) Priorität: 09.12.2003 DE 10357374
(43) Veröffentlichungstag der Anmeldung: 25.10.2006
(73) Patentinhaber: KNORR-BREMSE SYSTEME FÜR NUTZFAHRZEUGE GMBH, 80809 München (DE)
(72) Erfinder: LEINUNG, Andreas, 81377 München (DE); LEISTER, Markus, 80993 München (DE); PAHLE , Wolfgang, 83707 Bad Wiessee (DE)
(74) Vertreter: Mattusch, Gundula
(86) Internationale Anmeldenummer: PCT/EP2004/014009
(87) Internationale Veröffentlichungsnummer: WO 2005/059396

(56) Entgegenhaltungen:
- WO-A-02/14708
- WO-A-03/036122
- WO-A-03/069181
- US-A- 3 771 625
- US-A1- 2003 006 104
- US-B1- 6 336 531

## Beschreibung

Die vorliegende Erfindung betrifft eine pneumatisch betätigte Scheibenbremse mit elektromotorisch angetriebenen Nachstellvorrichtungen nach dem Oberbegriff des Anspruchs 1 und ein Verfahren zur Ansteuerung der Scheibenbremse.

Eine gattungsgemäße Scheibenbremse und ein Verfahren zum Einstellen des Lüftspiels dieser Bremse sind aus der WO 003/069181 A bekannt.

Eine mittels einer Feder an einen Anschlag verschiebliche Bremsscheibe einer Fahrrad-Scheibenbremse ist aus der US 6 336 531 B 1 bekannt.

Bei bekannten druckluftbetätigten Scheibenbremsen erfolgt eine Bremsung durch eine Betätigung der Zuspannvorrichtung, beispielsweise mittels einer Bewegung einer Kolbenstange eines pneumatisch arbeitenden Bremszylinders, durch die ein angeschlossener Bremsbelag gegen die Bremsscheibe gepresst wird. Je nach dem ob die Scheibenbremse als Festsattelbremse oder als Schiebe- oder Schwenksattelbremse ausgelegt ist (oder als Kombination aus diesen Bremsentypen), wird entweder die Bremsscheibe gegen den weiteren Bremsbelag auf der anderen Seite der Bremsscheibe und/oder dieser weitere Bremsbelag gegen die Bremsscheibe bewegt, insbesondere geschoben.

Bei Festsattelbremsen, siehe z.B. die WO 02/14708, wird die axial bewegliche, jedoch drehmomentübertragend auf einer Radnabe oder einem anderen Bauteil gelagerte Bremsscheibe durch axiale Verschiebung und unter Überwindung eines Lüftspiels gegen den weiteren, bevorzugt relativ zum Festsattel feststehenden, Bremsbelag gedrückt.

Nach Beendigung des Bremsvorgangs erfolgt zumindest auf der der Zuspannvorrichtung abgewandten Seite oftmals kein definiertes Lösen des Bremsbelages von der Bremsscheibenreibfläche sondern die Bremsbeläge bleiben aufgrund der einwirkenden Reibkräfte, die sich aus einer Belaghalterung und gegebenenfalls dem Schiebewiderstand des Bremssattels ergeben, mit einer Restdruckkraft an der Bremsscheibe haften.

Ein Lösen des Kontaktes zwischen Bremsscheibe und Bremsbelag erfolgt durch die im Fahrbetrieb üblicherweise auftretenden Erschütterungen oder infolge eines an sich unerwünschte, sogenannten Taumelschlages der Bremsscheibe.

Durch den weiteren Kontakt zwischen den Bremsbelägen und der Bremsscheibe nach dem Lösen der Zuspannvorrichtung ergibt sich ein zusätzlicher Verschleiß sowohl der Bremsscheibe als auch der Bremsbelägen, woraus eine verringerte Standzeit der Verschleißteile mit den entsprechenden Kostennachteilen hinsichtlich einer Ersatzteilbeschaffung und Montage bzw. Demontage resultiert.

Es kann auch sein, dass sich durch eine etwas längere Anlage der Bremsbeläge an der Bremsscheibe die Bremsentemperaturen etwas erhöhen, was sich ebenfalls nachteilig auf die Standzeit auswirken kann. Überdies kann der aufgrund der Reibung der entsprechenden Bauteile in ungebremste Stellung auftretende, erhöhte Fahrwiderstand zu einem gewissen zusätzlichen Kraftstoffverbrauch führen, was vermieden werden sollte.

Neben dem fehlenden Zwangslüften, also der sicheren Lösung der Bremsbeläge von der Bremsscheibe nach Beendigung des Bremsvorganges, besteht ein weiteres konstruktives Problem von Festsattelscheibenbremsen darin, dass die betriebsbedingt notwendige Mikrobeweglichkeit der Bremsscheibe und/oder des Bremssattels insbesondere bei starker Vibrationsbeanspruchung, wie sie beim Befahren von schlechten Straßen auftritt, zu einem starken Verschleiß vor allem an den Formschlußelementen führen: hierzu zählt insbesondere eine Keilverzahnung, mit der die axial verschiebbare Bremsscheibe verdrehsicher an einem Achsflansch oder einem vergleichbaren fahrzeugseitigen Bauteil gehalten wird.

Die auftretende, außerordentliche Beanspruchung der Formschlußteile erfordert ein verschleißbedingtes vorzeitiges Auswechseln der entsprechenden Bauteile mit den sich daraus ergebenden Kosten.

Der vorliegenden Erfindung liegt daher die Aufgabe zugrunde, eine Scheibenbremse der gattungsgemäßen Art so weiter zu entwickeln, daß mit konstruktiv einfachen Mitteln der Verschleiß der Bremsscheibe und der Bremsbacken minimiert, die Betriebssicherheit verbessert und die Standzeit insgesamt erhöht wird.

Darüber hinaus soll ein besonders vorteilhaftes Verfahren zum Ansteuern der elektromotorisch angetriebenen Nachstellvorrichtungen geschaffen werden, das für gattungsgemäße und auch die erfindungsgemäße Scheibenbremse nutzbar ist.

Die Aufgabe wird zunächst durch eine Scheibenbremse mit den Merkmalen des Anspruchs 1 gelöst.

Durch den Gegenstand des Anspruchs 1 wird auch auf einfache konstruktive Weise gewährleistet, dass beim Lösen der Zuspannvorrichtung, also beim Beenden des Bremsvorganges, zwangsweise durch die elastische Kraft ein Freispiel zwischen den Bremsbacken bzw. deren Bremsbelägen und der Bremsscheibe erzeugt wird, so dass sich diese Bauteile sich nur während der einer Bremsung kontaktieren und danach wieder voneinander lösen. Dabei entspricht das Freispiel dem durch die Nachstellvorrichtung bestimmten Lüftspiel, also dem Abstand zwischen der Bremsscheibe und der Bremsbacke.

Derart werden Bremsungen nicht behindert und dennoch die bei Fahrten auftretenden Schleifeffekte mit der Folge höheren Verschleißes und Kraftstoffverbrauchs minimiert und die Möglichkeit zur "intelligenten" Einstellung des Lüftspiels unter Einschluss "intelligenter" Lüftspielfunktion optimiert. Durch die Möglichkeit zur Minimierung des Kraftstoffverbrauches wird diese Scheibenbremse zwangsläufig in Zukunft die Bremse der Wahl sein, insbesondere in der zusätzlich raumsparenden Anordnung als Festsattelbremse mit intelligenter - da elektrisch angetriebener und elektronisch - beispielsweise über ein bremsenintegriertes Steuergerät oder ein "aufgerüstetes" EBS-Steuergerät - steuer- und regelbare Nachstellfunktion.

Die elastische Vorspannung des beweglichen Elementes - Bremssattel oder Bremsscheibe - am Anschlag am fahrzeugseitigen Bauteil ist insbesondere vorteilhaft, da die Nachstellvorrichtungen beidseits der Bremsscheibe wenigstens einen oder mehrere elektromechanische Antriebe - Elektromotoren - aufweisen und über eine Elektronik ansteuerbar sind.

Nach der Erfindung sind wenigstens eine oder mehrere der Nachstellvorrichtungen auf jeder Seite der Bremsscheibe angeordnet, die sämtlichst elektromechanisch angetrieben sind und zwar mittels unabhängiger Motoren für die Zuspannseite und die Reaktionsseite der Bremsscheibe, so dass sich die Beweglichkeit der Bremsscheibe auf einen "Mikroverschiebeweg" - den bei der Zuspannung zu überbrückenden Weg - beschränken kann.

Nach einer Variante ist der Bremssattel relativ zu einem fahrzeugseitigen Bauteil wie einem Achsflansch oder dergleichen unbeweglich, insbesondere als Festsattel, ausgebildet. Hierbei bietet es sich insbesondere als konstruktiv einfach an, wenn die Bremsscheibe axial verschiebbar aber undrehbar auf dem fahrzeugseitigen Bauteil gelagert ist.

Konstruktiv ist es vorteilhaft, wenn der Anschlag am fahrzeugseitigen Bauteil ausgebildet und die elastische Vorspannung durch Druckelemente realisiert ist, die sich ebenfalls an dem fahrzeugseitigen Bauteil abstützen. Dabei kann jedes Druckelement in einfacher Weise aus einem an der Bremsscheibe anliegenden Kontaktstück und einer Druckfeder bestehen.

Nach einer vorteilhaften Weiterbildung der Erfindung ist vorgesehen, daß die axial verschiebbar gelagerte Bremsscheibe durch das federnd gehaltene Druckelement gegen den Anschlag drückbar ist.

Die Federkräfte werden vorzugsweise von Stahlfedern oder einem vergleichbaren Federwerkstoff aufgebracht, die in einer entsprechenden Aufnahme des Bremssattels, des Achsflansches oder dgl. einliegen und an denen sich das jeweilige Druckelement abstützt.

Die Federkräfte sind dabei so zu bemessen, daß die bei einem Antastvorgang bei Lüftspieleinstellvorgängen in der Kraftangriffszone der Bremsscheibe auftretenden Kräfte von beispielsweise 1 - 2 kN sowie die im wesentlichen im Schwerpunkt der Bremsscheibe auftretenden axial wirkenden Massenkräfte von beispielsweise 2 - 4 kN keine bzw. lediglich eine vernachlässigbar geringe Axialbewegung der Bremsscheibe hervorrufen und bei einem Bremsvorgang diese der notwendigen Relativbeweglichkeit der Bremsscheibe entgegengerichteten Kräfte nur geringfügig anwachsen.

Die genannten im Schwerpunkt der Bremsscheibe auftretenden, axial wirkenden Massenkräfte, die als Vibrationsbeanspruchung auftreten und die zur Kompensation entsprechende, durch die federnden Druckelemente aufzubringenden Haltekräfte bedingen einerseits und die um den Faktor 2 geringeren Anlegekräfte beim Antasten, die entsprechend geringere Haltekräfte der federnden Druckelemente erfordern, können dadurch in Einklang gebracht werden, daß bei der Verstellung der Bremsscheiben durch Verstell- bzw. Betätigungskolben der Bremse aufgrund des einseitigen Kraftangriffs an der Reibfläche der Bremsscheibe zunächst nur eine geringe Kippbewegung der Bremsscheibe ausgeführt wird, wobei lediglich eine Teilkraft der radial weiter innen liegenden federnden Druckelemente überwunden werden muß.

Da die Massenkräfte im wesentlichen im Schwerpunkt der Bremsscheibe angreifen, wirkt diesen Massenkräften die volle Anlegekraft der Druckelemente entgegen.

Durch eine geeignete Wahl der Position der Bremsbetätigungskolben sowie der Position der Druckelemente, die beide in gewissen Grenzen wählbar sind, kann das Verhältnis zwischen dem Betätigungswiderstand einerseits und den Haltekräften bei Vibrationseinwirkung ebenfalls in gewissen Grenzen frei gewählt werden.

Prinzipiell kann das Druckelement aus einer Druckfeder bestehen, die stirnseitig an der Bremsscheibe und/oder dem Bremssattel anliegt. Besonders vorteilhaft ist jedoch eine Ausbildung der Druckelemente in der Form, dass der Anlagebereich aus einem nicht federnden Kontaktstück besteht, so dass die Feder selbst nicht in direktem Kontakt mit der Bremsscheibe steht. Hierdurch werden die unter Umständen hohen Kontakttemperaturen, die ansonsten zu einer Reduzierung der Federspannkraft führen könnten, nicht auf die Feder selbst übertragen. Das Kontaktstück und die sich daran anschließende Feder können als ein einziges Bauteil ausgebildet sein, aber auch aus zwei zusammenwirkenden Bauteilen bestehen.

Es ist auch denkbar, dass der Bremssattel relativ zu einem fahrzeugseitigen Bauteil wie einem Achsflansch oder dergleichen beweglich, insbesondere als Schiebesattel, ausgebildet ist und dass sich der Bremssattel unter elastischer Vorspannung am Anschlag am fahrzeugseitigen Bauteil (Bremssattel) abstützt. Bei einer Ausführung der Scheibenbremse als Schiebe- oder Schwenksattelbremse mit feststehender Bremsscheibe und beweglichem Bremssattel, kann derart auch eine elastische "Rückstell- und Haltekraft" wirken, durch welche der Bremssattel gegen die bei der Lüftspieleinstellung wirkenden Kräfte in der Anschlagposition gehalten wird und die wiederum derart bemessen wird, dass beim Betätigen der Bremse der dann notwendigen Bewegung des Bremssattels nur ein geringern Widerstand entgegenstellt wird, der die Bremsung nicht behindert.

Die Erfindung schafft auch ein Verfahren zum Einstellen des Lüftspiels einer pneumatisch betätigten Scheibenbremse gemäß Anspruch 6.

Dabei bietet es sich aus Sicherheitsgründen an, wenn das Verfahren zum Lüftspieleinstellen unter Einsatz der sensorlosen Ermittlung von Bremsungen in vorgegebenen Intervallen von z.B. 0, 5 bis 3 min wiederholt wird.

Es ist ferner zweckmäßig, wenn das Verfahren zum Lüftspieleinstellen nach dem Erkennen einer eingeleiteten Bremsung unterbrochen und dann nach einem vorgegebenen - nur einige Sekunden langen - Zeitintervall wiederum wiederholt wird.

Nachfolgend werden mit Motor 1 der wenigstens eine oder die mehreren zuspannseitigen Motoren nebst zugehöriger(n) Nächstellvorrichtung(en) auf einer Seite der Bremsscheibe und mit Motor2 der wenigstens eine oder die mehreren reaktionsseitigen Motoren nebst zugehöriger(n) Nachstellvorrichtung(en) auf der anderen Seite der Bremsscheibe bezeichnet.

Besonders bevorzugt wird zudem nach einer besonders bevorzugten Variante:
- bei einer Lüftspieleinstellung zunächst mittels dem einen Motor M1 die wenigstens eine zuspannseitige Nachstellvorrichtung auf einen vorgegebenen Mindestlüftspielabstand zwischen Bremsbacke und Bremsscheibe von z.B. 300 Mikrometer gefahren,
- dann die reaktionsseitige Nachstellvorrichtung mittels dem Motor M2 in Richtung der Bremsscheibe bewegt, bis eine Stillstandsposition erreicht wird, welche erfasst wird,
- woraufhin die reaktionsseitige Nachstellvorrichtung danach wieder in Richtung der Bremsscheibe verfahren wird und gleichzeitig versucht wird, den zuspannseitigen Motor M1 zu öffnen, wobei dann, wenn dies nicht möglich ist, auf eine Bremsung geschlossen wird,
- und wobei dann, wenn keine Bremsung vorliegt, der reaktionsseitige Motor M2 ausgehend von der ermittelten Nulllage in seine korrekte Mindestlüftspielstellung geöffnet wird. Sodann wird vorzugsweise ferner
- nach dem Einstellen des Mindestlüftspiels am reaktionsseitigen Motor M2 der zuspannseitige Motor M1 in Richtung der Bremsscheibe verfahren,
- bis er eine Stillstandsposition erreicht, welche erfasst wird, wobei Anschlags- bzw. Stillstandspositionen in der Richtung größeren Verschleißes im Bezug auf eine Mindestlüftspielstellung als Stillstandsposition übernommen werden, wohingegen Anschlags- bzw. Stillstandspositionen in entgegengesetzter Richtung verworfen werden,
- woraufhin der zuspannseitige Motor M1 ausgehend von der ermittelten Stillstandsposition an der Bremsscheibe auf sein Mindestlüftspiel verfahren wird.

Es ist derart sensorlos auf einfache Weise möglich, aus Motorstillstand bei Öffnungsbewegen der Nachstellvorrichtungen vom Anschlag aus auf eingeleitete Bremsungen zu schließen

Die Erfindung schafft zudem auch ein Verfahren zur Ansteuerung einer erfindungsgemäßen Scheibenbremse, bei dem die Position der Bremsscheibe oder des Bremssattels am Anschlag als Referenzpunkt bei einer Ansteuerung der Nachstellmotoren der Scheibenbremse verwendet wird.

Dies ist außerordentlich vorteilhaft, da hiermit auf einfache Weise der für Ansteuerungen aller Art (Lüftspieleinstellen, Reinigen der Scheibe usw.) notwendige Nullpunkt derart auf einfache Weise immer wieder präzise ermittelbar ist. Zur Vermeidung eines momentan übermäßig hohen Stromverbrauchs kann die Nachstellung auch sequentiell nacheinander an den verschiedenen Bremsen eines Fahrzeuges erfolgen. Durch den Anschlag sind auch die Bewegungen von Scheibe und/oder Belägen bei den Lüftspieleinstellungen und -funktionen aller Art quasi "kräftefrei" bzw. ohne übermäßige entgegenstehende Reibkräfte oder dgl. realisierbar und damit besonders präzise und zuverlässig ausführbar. Verfahren zum Stand der Technik sind aus der EP 0 703 133 B1 und der DE 44 33 377 A1 bekannt.

Nach einer weiteren auch unabhängigen Variante erfolgt nach Bremsungen ein ergänzendes aktives Lösen der Bremsbeläge von der Bremsscheibe mittels der Nachstellvorrichtungen.

Weitere vorteilhafte Ausbildungen der Erfindung werden nachfolgend anhand der beigefügten Zeichnungen beschrieben. Es zeigen:
- Fig. 1: eine Scheibenbremse in einer geschnittenen, schematischen Seitenansicht,
- Fig. 2a,b;3a,b: jeweils Einzelheiten verschiedener Ausführungsbeispiele, ebenfalls in schematischen Seitenansichten jeweils nebst einem zugehörigen Kraft-Wegdiagram, und
- Fig. 4: ein Flussdiagramm zum erfindungsgemäßen Ansteuerungsverfahren.

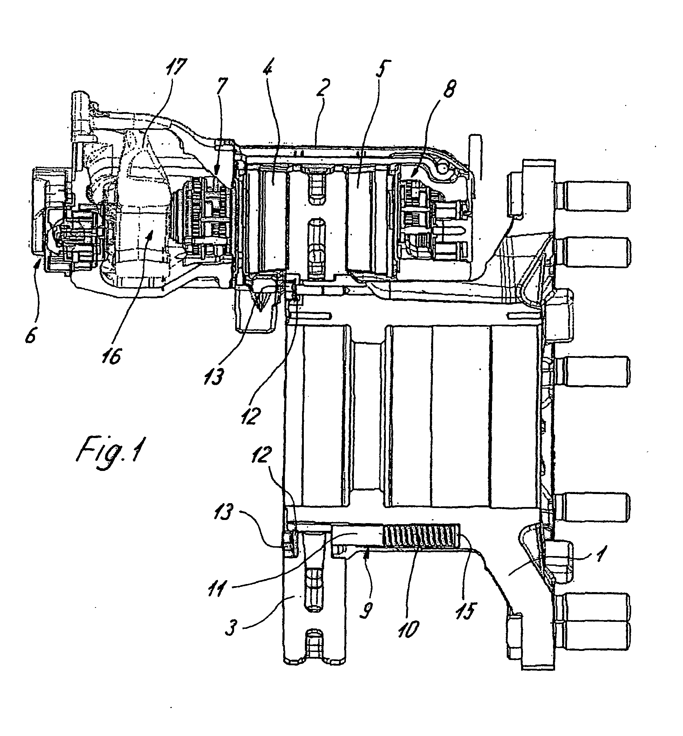

In der Figur 1 ist eine hier beispielhaft als Festsattelbremse ausgebildete Scheibenbremse für Nutzfahrzeuge dargestellt, die einen als Festsattel ausgebildeten Bremssattel 2 aufweist, der eine Bremsscheibe 3 übergreift, die axial verschiebbar und verdrehgesichert auf einem als Achsflansch 1 ausgebildeten Fahrzeugteil angeordnet ist. Der Festsattel 2 ist am Achsflansch 1 unbeweglich fixiert.

Im Festsattel 2 ist eine von einer Kolbenstange eines Bremszylinders betätigbare Zuspannvorrichtung 16 mit einem im Bremssattel exzentrisch gelagerten Drehhebel 17 angeordnet, die derart ausgelegt und konstruiert ist, dass bei einem Verschwenken des Drehhebels 17 Druckstücke (hier nicht detailliert zu erkennen) auf dieser Seite der Bremsscheibe 3 (Zuspannseite genannt) parallel zur Bremsscheibenachse verschoben werden, die eine zuspannseitig angeordnete Bremsbacke 4 gegen die Bremsscheibe 3 pressen, welche sich bei weiter fortschreitender Zuspannbewegung axial in Richtung der weiteren auf der anderen Seite der Bremsscheibe (Reaktionsseite) verschiebt, bis sie dort zur Anlage kommt und die eigentliche Bremswirkung zwischen der Bremsscheibe 3 und den Bremsbelägen 4, 5 einsetzt. Durch die reibende Anlage beider Bremsbacken 4, 5 werden die Bremsscheibe 3 und mit ihr die Radnabe 1 bzw. ein angeschlossenes, nicht dargestelltes Rad abgebremst. Zur Funktion einer beispielhaften Zuspannvorrichtung sei ergänzend auf die WO 02/14708 verwiesen.

Beiden Bremsbacken 4, 5 sind jeweils zuspannseitig und reaktionsseitig wenigstens eine, insbesondere je zwei, Nachstellvorrichtungen 7, 8 zugeordnet, mit der ein betriebsbedingter Verschleiß der Bremsbacken 4, 5 ausgleichbar ist, d. h., beispielsweise nach jedem oder mehreren Bremsvorgang(vorgängen) erfolgt eine Zustellung der Bremsbacken 4, 5 in Richtung der Bremsscheibe 3 um die Abriebdicke. Die Nachstellvorrichtungen sind elektromechanisch angetrieben, wobei hier auf jeder Seite der Bremsscheibe jeweils ein Elektromotor 6 vorgesehen ist, von denen hier der zuspannseitige Elektromotor 6 zu erkennen ist, der über eine Antriebsverbindung auf Drehspindeln oder dgl. einwirkt, welche bei einem Verdrehen die axiale Position der Druckstücke relativ zur Bremsscheibe 3 verändern. Der Vorteil dieser Nachstellvorgänge liegt unter anderem in der Möglichkeit zur Nutzung "intelligenter" Lüftspielfunktionen, die über ein bloßes Nachstellen der Bremse weit hinausgehen.

Um zu gewährleisten, daß die Bremsscheibe 3 nach Beendigung des Bremsvorganges in ihre Ausgangsposition zurückgeschoben wird, so daß zwischen der äußeren Bremsbacke 5 und der Bremsscheibe 3 ein ausreichendes Freispiel entsteht, sind erfindungsgemäß in Verschieberichtung der Bremsscheibe 3 federnde Druckelemente 9 vorgesehen, an denen die Bremsscheibe 3 anliegt.

Nach einer hier nicht zu erkennenden Variante sind mehrere in Umfangsrichtung gleichmäßig verteilte Druckelemente 9 vorgesehen, die vorzugsweise im Bereich des axial inneren Randes der Bremsscheibe 3 anliegen.

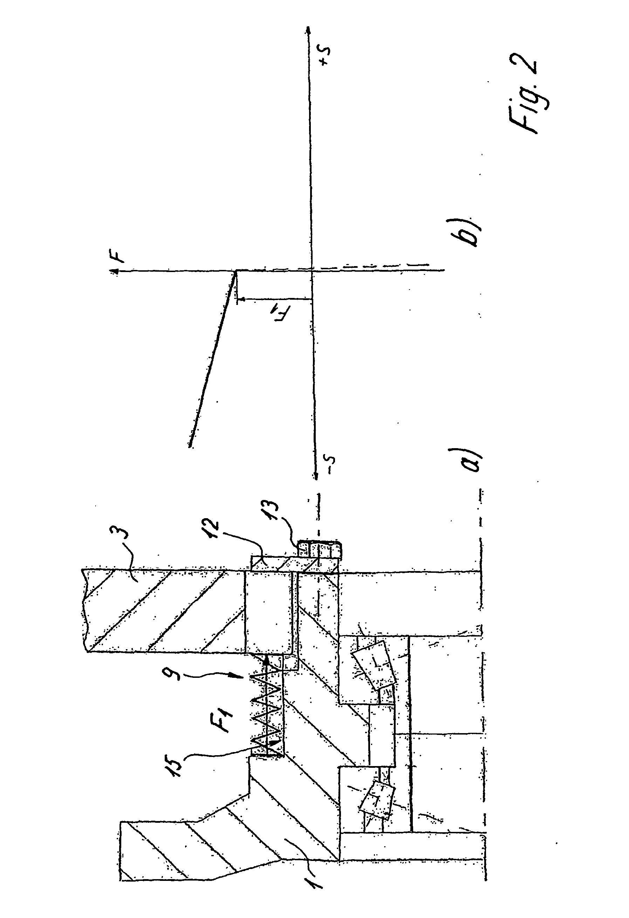

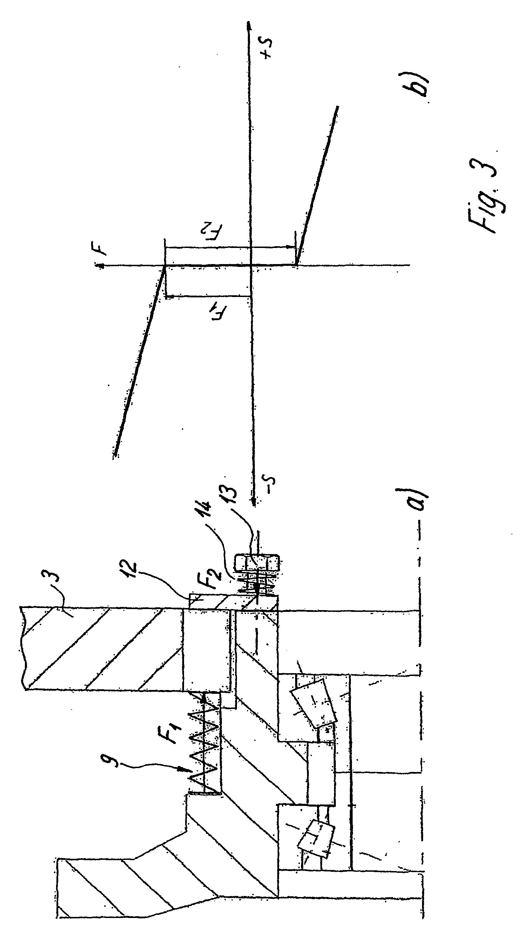

Die durch die Druckelemente 9 bedingte Verschiebung der Bremsscheibe 3 wird begrenzt durch Anschläge 12, die besonders deutlich in den Figuren 2 und 3 erkennbar sind.

Die feststehenden Anschläge 12 sind durch Schrauben 13 gehalten, die stirnseitig in den Achsflansch 1 eingedreht sind.

Nach Figur 1 ist das Druckelement 9 beispielhaft in kompakter Anordnung zweiteilig ausgebildet. Es umfasst ein Kontaktstück 11, das an der Bremsscheibe 3 anliegt und eine als Schraubenfeder ausgebildete Druckfeder 10 zur Erzeugung der elastischen Vorspannung zwischen dem Anschlag 12 und der Bremsscheibe 3.

Durch die zweiteilige Ausbildung wird wirksam verhindert, daß beim Bremsen entstehende Reibwärme von der erwärmten Bremsscheibe 3 auf die Druckfeder 10 übertragen wird.

Die Druckelemente 9 sind jeweils in eine sich axial erstreckenden Ausnehmung 15 des Achsflansches 1 eingesetzt.

Der Anschlag 12 befindet sich dabei auf der Zuspannseite, so dass die Bremsscheibe von der Reaktionsseite her in Richtung der Zuspannseite nach einer Bremsung zurückgestellt wird.

In den Figuren 2 und 3 ist jeweils ein Teilausschnitt der Scheibenbremse im Anlagebereich eines Druckelementes 9 an der Bremsscheibe 3 dargestellt.

Während in der Figur 2 der den Rückschiebweg der Bremsscheibe 3 begrenzende Anschlag 12 fest positioniert ist, ist er bei dem Ausführungsbeispiel in Figur 3 in Verschieberichtung der Bremsscheibe 3 federnd gelagert, wozu ein Druckelement 14 in Form einer Schraubenfeder vorgesehen ist, die sich einerseits am Kopf der Schraube 13 und andererseits am Anschlag 12 abstützt.

Durch eine entsprechende Dimensionierung der Federkräfte der Druckelemente 9, 14 ist eine axiale Lagerung der Bremsscheibe gegeben, welche bei extremen Kurvenfahrten und den dabei auftretenden außergewöhnlichen Verformungen der Achsenbauteile ein Verschieben der Bremsscheibe über die Stillstandsposition hinaus zulässt. Zur vollen Funktionsfähigkeit muss selbstverständlich die Federkraft des Druckelementes 14 größer sein als die des Druckelementes 9, das eine Gegenkraft bildet (siehe jeweils Fig. 2b und 3b).

Im übrigen wird durch den Einsatz der beiden Druckelemente 9, 14 erreicht, daß die Bremsscheibe 3 auch bei betriebsbedingten erheblichen Erschütterungen in ihrer Position gehalten wird.

Die Federkraft, vorzugsweise resultierend aus einer Druckfeder, ist insbesondere derart bemessen, dass bei einer Betätigung der Bremse die notwendige Relativbewegung zwischen der Bremsscheibe und dem Bremssattel ohne einen überhöhten Federwiderstand ermöglicht wird. Andererseits soll die Federkraft so sein, dass bei einer undefinierten Position z. B. eines Schiebesattels durch im Betrieb, beispielsweise bei einer Kurvenfahrt, auftretende Massenkräfte ein einseitiges Schleifen der Bremse verhindert wird, d. h., die Federkraft muss ausreichend sein, um die auftretenden Massenkräfte aufnehmen zu können. Dies gilt gleichermaßen für die als Schiebescheibe fungierende Bremsscheibe einer Festsattelbremse.

Die vom federnden Druckelement aufgebrachte Anlegekraft soll auch so bemessen sein, dass die bei einer normalen Fahrt auftretenden Massenkräfte und -momente die Bremsscheibe und/oder den Bremssattel nicht dauerhaft aus der Anlegeposition fortbewegen können. Die Andruckkräfte des oder der federnden Druckelemente sollen andererseits so gering gehalten sein, dass bei Betätigung der Bremse nur ein geringstmöglicher Widerstand zu überwinden ist, da dieser ansonsten zu ungleichen Bremskräften an den beiden Seiten der Bremsscheibe und damit zu einem ungleichen Bremsbelagverschleiß führen kann.

Die Scheibenbremse mit den elektromechanischen bzw. elektromotorisch angetriebenen Nachstellvorrichtungen 7, 8 auf jeder Seite der Bremsscheibe 3, insbesondere in Verbindung mit dem Anschlag 12, an dem die Bremsscheibe 3 und/oder der Bremssattel 2 unter elastischer Vorspannung im gelösten Zustand der Bremse anliegen, ermöglicht auch eine besonders vorteilhafte Ausgestaltung des Bremsverfahrens zur Lüftspieleinstellung, welches notwendig ist, um verschleißbedingte Veränderungen sowie erstmalig nach der Inbetriebnahme nach einem Belagwechsel oder bei der Erstbetriebnahme des Lüftspiels zwischen dem Bremsbelägen und der Bremsscheibe ein- bzw. nachzustellen.

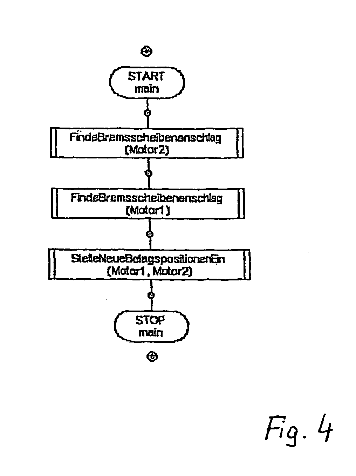

Nachfolgend wird dieses Verfahren unter Bezug auf die Figuren 4 bis 5 näher beschrieben. Dabei sind die Verfahrensschritte nicht auf die beschriebene Vorgehensweise beschränkt. Denkbar ist es z.B. die Reihenfolge der Abläufe in Hinsicht auf die Verfahrensschritte am reaktionsseitigen und am zuspannseitigen Bremsbelag weitgehend zu vertauschen, sofern dies möglich ist.

Aufgabe der Lüftspieleinstellung ist es, einen optimalen Abstand zwischen der Bremsscheibe 3 und den Bremsbelägen bzw. Bremsbacken 4 und 5 zueinander einzuregeln und derart Verschleiß und thermische Dehnungen über die Lebensdauer zu kompensieren.

Dabei ist es erforderlich, dauerhaft eine Mindestluft bzw. ein Mindestlüftspiel zwischen den Bremsbacken 4, 5 und der Bremsscheibe 3 zu garantieren.

Das Mindestlüftspiel setzt sich aus der Summe der Einzellüftspiele zu beiden Seiten der Bremsscheibe 3 zwischen den Bremsbacken 4 und 5 und der Bremsscheibe 3 zusammen.

Ohne ein ausreichendes Mindestlüftspiel besteht die Gefahr eines Heißlaufens, wenn in einem solchen Zustand zu lange oder zu stark gebremst und die Bremspaarung nicht mehr lösbar thermisch verspannt.

Insbesondere in Kombination mit der vorstehend erörterten quasi festen bzw. federnd an einem definierten Anschlag anliegenden Bremsscheibe 3, die derart ausgelegt ist, nicht durch Nachstellerkraft oder durch Bremskraft oder thermische Verspannkraft verschoben werden kann, soll es möglich sein, daß die Bremsscheibe 3 bei einseitiger thermischer Verspannung (einseitiges Lüftspiel) zur anderen Seite ausweichen kann und die verbleibende einseitige Verspannung anschließend noch von den elektromechanischen Motoren der Nachstellvorrichtung 7, 8 zu lösen ist. Ein einseitiges Mindestlüftspiel soll also auch der anderen Seite der Bremsscheibe zur Verfügung stehen.

Eine ergänzende Notwendigkeit bei allen über die elektromotorische Nachstellvorrichtungen 7, 8 erfolgenden Lüftspieleinstellung ist die Notwendigkeit, jederzeit auf einfache Weise Bremsungen erkennen zu können.

Zwar ist dies theoretisch ohne weiteres möglich, indem ein Bremssignal z.B. von einem Steuergerät (ABS, ESP oder dgl.) auch zur Bremserkennung an der Scheibenbremse genutzt wird, um die Nachstellvorrichtungen jeweils nur anzusteuern, wenn keine Bremsung eingeleitet ist.

Es ist aber auch wünschenswert, ein Verfahren zur Einstellung des Lüftspiels zuschaffen, bei denen Bremsungen an der Bremse selbst von deren vorzugsweise in die Bremse integrierten Elektronik ermittelt wird. Nach der Erkenntnis der Erfindung ist dies ohne weiteres allein durch geschicktes Ansteuern der Nachstellvorrichtungen möglich, wenn die Elektronik der Bremse zumindest dazu ausgelegt ist, einen Stop der Nachstellvorrichtungen zu erkennen.

Da die Bremsscheibe 3 unter elastischer Vorspannung während eines Bremsvorganges vom zuspannseitigen Belag bzw. von der zuspannseitigen Bremsbacke in Richtung des sattelrückseitigen bzw. auf der abgewandten Seite der Bremsscheibe befindlichen Bremsbelages 5 verschoben wird, werden während einer Bremsung beide Bremsbeläge 4, 5 blockiert.

Ohne eine Bremserkennung vermutet die Nachstellerelektronik in diesem Fall fälschlicherweise zwei an der Bremsscheibe anliegende Beläge, was nach der Bremsung nicht mehr der Fall ist. Das anschließend eingestellte Lüftspiel wäre dann zu groß.

Zur Vermessung der beidseitigen Bremsscheibenpositionen und zur gleichzeitigen Erkennung der Bremsung sind zwei unabhängig voneinander verfahrbare Nachstellmotoren auf beiden Seiten der Bremsscheibe erforderlich.

Die Elektronik sowie die Software zur Steuerung der Nachstellermotoren auf beiden Seiten der Bremsscheibe muß daher ein unabhängiges Verfahren der Nachstellermotoren auf beiden Seiten der Bremsscheibe 3 zulassen.

Hierzu kann jede Bremse über ein eigenes elektronisches Steuergerät verfügen, oder es wird eine entsprechende Steuerungselektronik zentral für mehrere Bremsen vorgesehen, so z.B. an einem übergreifenden EBS-Steuergerät, die jede Seite separat steuert und/oder regelt.

Im einzelnen setzt sich eine Lüftspieleinstellung, wie aus Figur 4 zu erkennen, aus einer sequentiellen Abtastung der Bremsbelagpositionen beider Bremsscheibenseiten und einer anschließenden Neupositionierung der Bremsbacken bzw. Bremsbeläge 4, 5 relativ zur Bremsscheibe.

So startet das Programm gemäß Figur 4 mit einer Bremsscheibenanschlagserkennung auf einer Seite der Bremsscheibe und führt sodann die Bremsscheibenanschlagserkennung auf der anderen Seite der Bremsscheibe durch. Sodann werden die neuen Belagpositionen auf beiden Seiten der Bremsscheibe mittels Verfahren der Bremsbacken über die elektromechanischen Nachstellvorrichtung eingestellt und die Methode zur Lüftspielansteuerung stoppt.

Nachfolgend wird beispielhaft der Ablauf eines besonders vorteilhaften Ausführungsbeispiels des Verfahrens zur Lüftspieleinstellung beschrieben. Im einzelnen ist der Ablauf einer Lüftspieleinstellung wie folgt:

### Schritt 1

Zunächst wird bei einer Lüftspieleinstellung der zuspannseitige Motor M1 (und damit die zugehörige(n) Nachstelldreheinrichtung(en)) auf einen Mindestlüftspielabstand von z.B. 300 Mikrometer gefahren.

### Schritt 2

Der reaktionsseitige Motor M2 (und damit die zugehörige(n) Nachstelldreheinrichtung(en)) fährt danach oder dabei in Richtung der Bremsscheibe, bis er eine Stillstandsposition erreicht. Diese wird erfasst (z.B. über Veränderungen in der Strom- und/oder Spannungscharakteristik zum Versorgen des Motors.).

### Schritt 3

Motor M2 fährt danach wieder in Richtung der Bremsscheibe, bis er erneut eine Stillstandsposition erreicht. Gleichzeitig wird versucht, Motor M1 zu öffnen. Ist dies nicht möglich, ist klar, dass eine Bremsung eingeleitet wurde. Andernfalls wurde die Scheibenanlagestellung (d.h. eine Nulllage für die Lüftspieleinstellung) des Motors M2 an der Bremsscheibe korrekt erfasst.

### Schritt 4

Vorzugsweise erst am Ende beider Antastvorgänge werden beide Bremsbacken auf ihre optimalen Positionen relativ zur Bremsscheibe verfahren, da in der Zeit, in der der Motor 1 die Bremsscheibe antastet, das Mindestlüftspiel (Summe beider Seiten) einseitig vorgehalten wird. Das Auffahren von Motor 2 auf das nun vorübergehend einseitig eingestellte Mindestlüftspiel ist Schritt 4.

### Schritt 5

Sobald der Motor M2 seine Lüftspielstellung erreicht, wird der Motor M1 (und damit die zugehörige(n) Nachstelldreheinrichtung(en)) in Richtung der Bremsscheibe verfahren, bis er eine Stillstandsposition erreicht.

Die Stillstandsposition wird erfasst (z.B. über Veränderungen in der Strom- und/oder Spannungscharakteristik zum Versorgen des Motors.) Eine Bremserkennung wird auf dieser Seite vorzugsweise nicht durchgeführt, da die undefinierte Stellung des Drehhebels bei niedrigen Drücken die Lüftspielbestimmung verfälschen könnten.

Anschlags- bzw. Stillstandspositionen in der Richtung größeren Verschleißes werden als Position übernommen. Anschlags- bzw. Stillstandspositionen in entgegengesetzter Richtung werden dagegen verworfen.

Damit wird auch Motor M1 auf ein korrektes Lüftspiel (z.B. 300 Mikrometer oder mehr) eingestellt, so dass nunmehr das gesamte Lüftspiel auf beiden Seiten der Bremsscheibe korrekt eingestellt ist.

Gelingt es nicht, das Lüftspiel korrekt einzustellen, da z.B. eine Bremsung erkannt wurde, kann die Lüftspieleinstellung in vorgegebenen Intervallen wiederholt versucht werden.

Ein Motorstillstand in den Öffnungsrichtungen zeigt dabei Bremsungen an.

Nach jeder Bremsung oder solange noch kein korrektes Lüftspiel eingestellt wurde oder alternativ in einem regelmäßigen Intervall von z.B. 1 min oder jeweils einigen Sekunden nach einer Bremsbetätigung kann eine erneute Lüftspieleinstellung vorgenommen.

Besonders vorteilhaft ist, dass eine Bremserkennung während der Lüftspieleinstellung auch ohne Auswertung eines eine Bremsung anzeigenden Signals z.B. von einem Steuergerät oder dgl. (ABS, EBS, ESP oder dgl.) möglich ist, so dass auch an der Bremse autark über eine an der Bremse vorhandene Elektronik direkt eine Bremsung erkannt werden kann, um Heißläufer und dgl. zu vermeiden.

Die Notwendigkeit einer weiteren Lüftspieleinstellung ließe sich in Kombination mit einem EBS-System auch dadurch ableiten, daß man anhand von Bremsdrücken und Dauer der Bremsungen die geleistete Bremsenergie beobachtet, was zu einer weiteren Reduzierung der Nachstellertätigkeit führen würde. Es gibt also insofern noch mehrere denkbare Auslöser für eine Nachstellung. Es muß also kein festes Zeitraster sein.

Ein weiterer besonderer Vorteil des erfindungsgemäßen Verfahrens besteht darin, daß die Nachstellerantriebsmotoren mit einer vorgegeben Ansteuerungssequenz betreibbar sind, welche eine Überlagerung der elektrischen Leistungsaufnahme derselben weitgehend vermeidet. Es ist ferner eine Lüftspieleinstellung nach Art einer Antastmethode an die Bremsscheibe möglich, ohne daß eine Rückwirkung auf die der Bremsscheibe 3 gegenüberliegende Nachstellvorrichtung gegeben ist.

Besonders vorteilhaft werden die Nachstellmotoren als sensorlos betriebene elektronisch kommutierende Gleichstrommotoren ausgeführt (EC-Motoren, sensorlos betrieben). Bei diesen Motoren erfolgt die zum Betrieb derselben notwendige ständige Erfassung der Rotorposition durch eine Analyse der in den Spulen der Wicklung positionsabhängig veränderlichen elektrischen Größen. Der Vorteil ist die extreme Vereinfachung des mechanischen und elektromechanischen Aufbaus der Motoren und die damit verbundene höchstmögliche Robustheit derselben. Dabei wird allerdings eine etwas höhere bzw. eine relativ hohe Rechnerleistung im elektronischen Steuergerät benötigt, was in der Praxis kein Problem darstellt.

Der Betrag der elastischen Anlegekraft der Bremsscheibe 3 an die Radnabe ist zur Erzielung einer ausreichenden Rüttelfestigkeit so zu bemessen, daß auf auch bei härtestetem Fahreinsatz auf schlechten Wegstrecken an der Bremsscheibe auftretende Massekräfte und -momente diese Anlegekraft durch Rüttelbeanspruchungen nicht überwinden können.

Die Relativbeweglichkeit zwischen Bremsscheibe 3 und Bremssattel ist so zu gestalten, daß bei den Kräften, die bei dem Lüftspieleinstellvorgang durch ein Antasten sowie unter den im Fahrbetrieb auch schlechten Wegstrecken wirkenden Massekräfte und - momenten hervorgerufen werden, keine bzw. nur eine sehr geringe Relativbewegung eintritt und bei Bremsbetätigung den Bremsbetätigungskräften ein nur geringer Widerstand zur Ausführung der dann notwendigen Relativbewegung entgegengesetzt wird.

In der Praxis werden die elastischen Kräfte vorzugsweise von Stahlfedern oder einem vergleichbaren Federwerkstoff aufgebracht. Sie sind insbesondere derart bemessen, daß die beim Antastvorgang in der Kraftangriffszone der Bremsbetätigung auftretenden Kräfte von z.B. 1 bis 2 kN sowie die wesentlichen im Schwerpunkt der Bremsscheibe 3 auftretenden axial wirkenden Massekräfte von ca. 3 bis 4 kN noch keine bzw. nur eine vernachlässigbar geringe Axialbewegung der Bremsscheibe 3 hervorrufen, und daß bei einem Bremsvorgang diese der notwendigen Relativbeweglichkeit der Bremsscheibe 3 entgegengerichteten Kräfte nur geringfügig anwachsen.

Der scheinbare Konflikt zwischen relativ geringen Anlegekräften beim Antastvorgang und um ca. den Faktor 2 höheren Haltekräften gegen Vibrationsbeanspruchung wird bei der erfindungsgemäßen Bremsscheibe 3 dadurch gelöst, daß bei Verstellung der Bremsscheibe 3 durch die Verstell- bzw. Betätigungskolben der Bremse aufgrund des einseitigen Kraftangriffs an der Reibfläche der Bremsscheibe 3 zunächst nur eine geringe Kippbewegung der Bremsscheibe 3 ausgeführt wird, wobei nur eine Teilkraft der radial weiter innen liegenden Andrückfedern überwunden werden muss. Infolge der Rotation der Bremsscheibe 3 schraubt sich diese nur in axialer Richtung weiter. Da die Massekräfte jedoch im wesentlichen im Schwerpunkt der Bremsscheibe 3 angreifen, wirkt diesen Massekräften die volle Anlegekraft entgegen.

Durch geeignete Wahl der Position der Bremsbetätigungskolben sowie der Position der Anlagefedern bzw. Druckfedern, welche beide in gewissen Grenzen frei wählbar sind, kann das Verhältnis zwischen Betätigungswiderstand und Haltekräften bei Vibrationseinwirkung ebenfalls in gewissen Grenzen frei gewählt werden.

Die auf die Bremsscheibe 3 wirkenden Druckelemente sind dabei vorteilhaft derart ausgebildet, daß die federnde Wirkung nicht in dem Bereich der Federn erzeugt wird, die in direktem Kontakt mit der Bremsscheibe 3 steht, da durch die ggf. hohen Kontakttemperaturen die Federspannkraft reduziert werden kann.

Die Vorspannfedern der Druckelemente bestehen aus einem nicht federnden Kontaktbereich, über den die Federkräfte auf die Bremsscheibe 3 übertragen werden und dem die Federspannkraft erzeugenden Bereich, welcher außerhalb der Wärmeeinflusszone der Bremsscheibe 3 angeordnet ist. Kontaktbereich und Federspannkraftbereich können als ein einziges Bauteil ausgebildet sein oder auch zwei zusammen gehörenden Bauteilen bestehen.

### Bezugszeichenliste

- 1.: Achsflansch
- 2.: Bremssattel
- 3.: Bremsscheibe
- 4.: Bremsbacke
- 5.: Bremsbacke
- 6.: Zuspannvorrichtung
- 7.: Nachstellvorrichtung
- 8.: Nachstellvorrichtung
- 9.: Druckelement
- 10.: Druckfeder
- 11.: Kontaktstück
- 12.: Anschlag
- 13.: Schraube
- 14.: Druckelement
- 15.: Ausnehmung
- 16.: Zuspannvorrichtung
- 17.: Drehhebel

## Patentansprüche

1. Elektromechanisch oder pneumatisch betätigte Scheibenbremse, insbesondere für ein Nutzfahrzeug,
- mit einem Bremssattel (2) und einer Bremsscheibe (3), welche der Bremssattel (2) zumindest abschnittsweise an ihrem äußeren Umfang übergreift,
- einer ganz oder teilweise in den Bremssattel (2) eingesetzten Zuspannvorrichtung (6) zur Realisierung einer Zuspannbewegung zwischen den Bremsbelägen und der Bremsscheibe (3),
- wenigstens einer, vorzugsweise mehreren Nachstellvorrichtung(en) (7, 8), zum Einstellen des Lüftspiels zwischen den Bremsbacke (4, 5) und der Bremsscheibe (3) auf jeder Seite der Bremsscheibe, welche jeweils wenigstens einen elektromechanischen Antrieb - Motore M1 und M2 - zur getrennten Ansteuerung der Nachstellvorrichtungen auf den beiden Seiten der Bremsscheibe (3) aufweisen,
- wobei die Bremsscheibe (3) und der Bremssattel (2) relativ zueinander **dadurch** beweglich sind, dass entweder die Bremsscheibe (3) oder der Bremssattel (2) an einem fahrzeugseitigen Bauteil wie einem Achsflansch (1) oder dergleichen beweglich angeordnet sind,
**gekennzeichnet durch**
- einen Anschlag (12), an dem die Bremsscheibe (3) oder der Bremssattel (2) unter elastischer Vorspannung im gelösten Zustand der Bremse anliegen, wobei die wirkenden elastischen Vorspannkräfte derart ausgelegt sind, daß sie beim Zuspannen der Scheibenbremse unter Bewegung der Bremsscheibe (3) und/oder des Bremssattels (2) **durch** die Zuspannkräfte ohne weiteres überwunden werden, und die bewegliche Bremsscheibe (3) oder der bewegliche Bremssattel (2) bei Lüftspieleinstellvorgängen in einer relativ zum fahrzeugseitigen Bauteil feststehenden Position gehalten sind.

2. Scheibenbremse nach Anspruch 1, **dadurch gekennzeichnet, dass** die elastische Vorspannung derart bemessen ist, dass die bewegliche Bremsscheibe (3) oder der bewegliche Bremssattel (2) bei Kurvenfahrten entgegen den auftretenden Massenkräften in einer relativ zum fahrzeugseitigen Bauteil feststehenden Position gehalten sind.

3. Scheibenbremse nach einem der vorstehenden Ansprüche, **dadurch gekennzeichnet, dass** der Bremssattel (2) relativ zum fahrzeugseitigen Bauteil unbeweglich, insbesondere als Festsattel, ausgebildet ist.

4. Scheibenbremse nach einem der vorstehenden Ansprüche, **dadurch gekennzeichnet, dass** die Bremsscheibe (3) axial beweglich, insbesondere verschiebbar aber undrehbar auf dem fahrzeugseitigen Bauteil gelagert ist.

5. Scheibenbremse nach einem der vorstehenden Ansprüche, **dadurch gekennzeichnet, dass** der Anschlag am fahrzeugseitigen Bauteil ausgebildet ist und dass die elastische Vorspannung durch Druckelemente (9) realisiert ist, die sich an dem fahrzeugseitigen Bauteil abstützen.

6. Verfahren zum Einstellen des Lüftspiels einer pneumatisch betätigten Scheibenbremse nach einem der vorstehenden Ansprüche, **dadurch gekennzeichnet, dass** während des Einstellens des Lüftspiels einsetzende oder bereits eingeleitete Bremsungen aus dem Drehverhalten der Motoren M1 und M2 der Nachstellvorrichtungen ermittelt werden, wobei die Position der Bremsscheibe (3) oder des Bremssattels am Anschlag als Referenzpunkt bei einer Ansteuerung der Scheibenbremse verwendet wird.

7. Verfahren nach Anspruch 6, **dadurch gekennzeichnet, dass**
a) bei einer Lüftspieleinstellung zunächst mittels dem zuspannseitigen Motor M1 die wenigstens eine zuspannseitige Nachstellvorrichtung auf einen vorgegebenen Mindestlüftspielabstand zwischen Bremsbacke und Bremsscheibe verfahren wird,
b) dann die reaktionsseitige Nachstellvorrichtung mittels dem Motor M2 in Richtung der Bremsscheibe bewegt wird, bis eine Stillstandsposition erreicht wird, welche erfasst wird,
c) woraufhin die reaktionsseitige Nachstellvorrichtung mittels dem Motor M2 wieder in Richtung der Bremsscheibe verfahren wird und gleichzeitig versucht wird, mit dem zuspannseitigen Motor M1 die zuspannseitige Nachstellvorrichtung zu öffnen, wobei dann, wenn dies nicht möglich ist, auf eine Bremsung geschlossen wird.

8. Verfahren nach Anspruch 7, **dadurch gekennzeichnet, dass**
a) vorzugsweise nach einem Einstellen dieses Mindestlüftspiels am reaktionsseitigen Motor M2 und der reaktionsseitigen Nachstelleinrichtung der zuspannseitige Motor M1 in Richtung der Bremsscheibe verfahren wird,
b) bis er eine Stillstandsposition erreicht, welche erfasst wird, wobei Stillstandspositionen in der Richtung größeren Verschleißes im Bezug auf eine vorhergehende Mindestlüftspielstellung als Anschlagspositionen übernommen werden, wohingegen Anschlags- bzw. Stillstandspositionen in entgegengesetzter Richtung verworfen werden,
c) der zuspannseitige Motor M1 ausgehend von der ermittelten Stillstandsposition an der Bremsscheibe die zuspannseitige Nachstellvorrichtung auf ihr Mindestlüftspiel verfährt.

9. Verfahren nach Anspruch 8, **dadurch gekennzeichnet, dass** das Verfahren zum Lüftspieleinstellen in vorgegebenen Intervallen wiederholt wird.

10. Verfahren nach einem der Ansprüche 6 bis 9, **dadurch gekennzeichnet, dass** aus Motorstillstand bei Öffnungsbewegen vom Anschlag aus auf Bremsungen geschlossen wird

11. Verfahren nach einem der Ansprüche 6 bis 10, **dadurch gekennzeichnet, dass** das Verfahren zum Lüftspieleinstellen nach dem Erkennen einer eingeleiteten Bremsung unterbrochen und dann nach einem vorgegebenen Zeitintervall wiederum wiederholt wird.

12. Verfahren nach einem der Ansprüche 6 bis 11, **dadurch gekennzeichnet, dass** nach Bremsungen ein ergänzendes aktives Lösen der Bremsbeläge von der Bremsscheibe mittels der Nachstellvorrichtungen erfolgt.

## Claims

1. Electromechanically or pneumatically actuated disc brake, in particular for a utility vehicle,
- with a brake caliper (2) and a brake disc (3) which is embraced in part around its outer periphery by the brake caliper (2),
- a brake application device (6) contained wholly or in part in the brake caliper (2), for producing a brake application movement between the brake pads and the brake disc (3),
- at least one and preferably more than one adjustment device(s) (7, 8) for adjusting the air gap between the brake pad (4, 5) and the brake disc (3) on each side of the brake disc, each comprising at least one electromechanical drive - motors M1 and M2 - for the separate control of the adjustment devices on the two sides of the brake disc (3),
- such that the brake disc (3) and the brake caliper (2) can move relative to one another by virtue of the fact that either the brake disc (3) or the brake caliper (2) are arranged movably on a vehicle component such as an axle flange (1) or suchlike,
**characterised in that**
- it comprises a stop abutment (12) against which, in the released condition of the brake, the brake disc (3) or the brake caliper (2) bear under elastic prestress, such that the active elastic prestress forces are chosen in such manner that when the disc brake is applied by movement of the brake disc (3) and/or the brake caliper (2) under the action of the application forces, they are readily overcome and the movable brake disc (3) or the movable brake caliper (2) are held in a fixed position relative to the said vehicle component during air gap adjustment processes.

2. Disc brake according to Claim 1, **characterised in that** the elastic prestress is chosen such that while driving round a curve, the movable brake disc (3) or the movable brake caliper (2) are held in a position fixed in relation to the said vehicle component, in opposition to the inertial forces occurring.

3. Disc brake according to either of the preceding claims, **characterised in that** the brake caliper (2) cannot move relative to the vehicle component, in particular being made as a fixed caliper.

4. Disc brake according to any of the preceding claims, **characterised in that** the brake disc (3) is mounted so that it can move axially on the vehicle component, in particular being able to be displaced but not rotated.

5. Disc brake according to any of the preceding claims, **characterised in that** the stop abutment is formed on the said vehicle component, and the elastic prestress is applied by pressure elements (9) supported against the vehicle component.

6. Method for adjusting the air gap of a pneumatically actuated disc brake according to any of the preceding claims, **characterised in that** braking operations that begin or have already been initiated during the air gap adjustment are determined from the rotation behaviour of the motors M1 and M2 of the adjustment devices, and the position of the brake disc (3) or brake caliper (2) against the stop is used as a reference point when controlling the disc brake.

7. Method according to Claim 6, **characterised in that**
a) during an air gap adjustment, by means of the motor M1 on the brake application side the at least one adjustment device on the same side is first moved to a predetermined minimum air gap distance between the brake bad and the brake disc,
b) then the reaction-side adjustment device is moved by the motor M2 towards the brake disc until a stationary position is reached, which is registered,
c) whereupon the reaction-side adjustment device is again moved by means of the motor M2 towards the brake disc and, at the same time, it is attempted to open the adjustment device on the application side by means of the motor M1 on that side, and if this is not possible it is concluded that braking is in progress.

8. Method according to Claim 7, **characterised in that**
a) preferably following an adjustment of the said minimum air gap by means of the reaction-side motor M2 and the adjustment device on that side, the motor M1 on the brake application side is operated in the direction of the brake disc,
b) until a stationary position is reached, which is registered, whereupon stationary positions in the direction of greater wear in relation to a previous minimum air gap position are adopted as abutment positions, whereas abutment or stationary positions in the opposite direction are rejected,
c) starting from the stationary position against the brake disc determined, the motor M1 on the brake application side moves the adjustment device on that side to its minimum air gap position.

9. Method according to Claim 8, **characterised in that** the process of air gap adjustment is repeated at specified intervals.

10. Method according to any of Claims 6 to 9, **characterised in that** braking operations are inferred if the motor is at standstill during an opening movement from the stop abutment.

11. Method according to any of Claims 6 to 10, **characterised in that** the process of air gap adjustment is interrupted if the initiation of a braking operation has been recognised, and is then repeated again after a specified time interval.

12. Method according to any of Claims 6 to 11, **characterised in that** after braking operations a supplementary, active release of the brake pads from the brake disc is effected by means of the adjustment devices.

## Revendications

1. Frein à disque actionné par force pneumatique ou électromécanique, en particulier pour un véhicule utilitaire, comprenant
- un étrier de frein (2) et un disque de frein (3), lequel est chevauché par ledit étrier de frein (2), au moins en certains parties, à sa périphérie extérieure,
- au moins un moyen (6) à serrer le frein, qui est monté complètement ou en partie dans ledit étrier de frein (2) afin de réaliser un mouvement de serrage entre les garnitures de frein et ledit disque de frein (3),
- au moins un moyen de rattrapage, de préférence plusieurs moyens de rattrapage (7, 8), à régler le jeu d'aération entre les mâchoires de frein (4, 5) et ledit disque de frein (3) de chaque côté dudit disque de frein, dont chacun comprend au moins un système d'entraînement électromécanique - moteurs M1 et M2 - respectif pour la commande individuelle desdits moyens de rattrapage des deux côtés dudit disque de frein (3),
- dans lequel ledit disque de frein (3) et ledit étrier de frein (2) sont mobiles relativement l'un à l'autre d'une telle manière, que ledit disque de frein (3) ou ledit étrier de frein (2) soient disposés de façon mobile à un composant du côté du véhicule, par exemple une flasque d'axe (1) ou composant similaire,
**caractérisé par**
- une butée (12) contre laquelle s'appuient ledit disque de frein (3) ou ledit étrier de frein (2), à précontrainte élastique, en état desserré du frein, aux efforts de précontrainte élastique effectives étant conçus d'une telle manière, qu'ils soient franchi facilement par les efforts de serrage du frein quand le frein à disque est serré en mouvant ledit disque de frein (3) et/ou ledit étrier de frein, et que ledit disque de frein mobile (3) ou ledit étrier de frein mobile (2) soient retenu en position stationnaire, relativement audit composant du côté du véhicule, au cours des opérations de réglage du jeu d'aération.

2. Frein à disque selon la revendication 1, **caractérisé en ce que** ladite précontrainte élastique est si dimensionnée, qu'au cours de virage, ledit disque de frein (3) mobile ou ledit étrier de frein mobile (2) soient retenus, à l'encontre les forces inertielles y apparaissant, en une position stationnaire relativement audit composant du côté du véhicule.

3. Frein à disque selon une quelconque des revendications précédentes, **caractérisé en ce que** ledit étrier de frein (2) est conçu en une configuration immobile relativement audit composant du côté du véhicule, en particulier sous forme d'un étrier stationnaire.

4. Frein à disque selon une quelconque des revendications précédentes, **caractérisé en ce que** ledit disque de frein (3) est logé à mouvement axial, en particulier à déplacement mais sans être mobile autour d'un axe, audit composant du côté du véhicule.

5. Frein à disque selon une quelconque des revendications précédentes, **caractérisé en ce que** ladite butée est formée audit composant du côté du véhicule, et **en ce que** ladite précontrainte élastique est réalisée moyennant des éléments presseurs (9) s'appuyant audit composant du côté du véhicule.

6. Procédé à régler le jeu d'aération dans un frein à disque selon une quelconque des revendications précédentes, **caractérisé en ce que** des cycles de serrage du frein, qui commencent ou sont déjà déclenchés 'au cours de l'opération de réglage du jeu d'aération, sont déterminés par dérivation du comportement en révolution desdits moteurs M1 et M2 des moyens de rattrapage, en utilisation la position dudit disque de frein (3) ou dudit étrier de frein à ladite butée en tant que point de référence au cas de commande du frein à disque.

7. Procédé selon la revendication 6, **caractérisé en ce**
a) **qu**'au cours du cycle de réglage du jeu d'aération, on déplace d'abord ledit au moins un moyen de rattrapage du côté de serrage, moyennant ledit moteur M1 du côté de serrage, à un écart minimal du jeu d'aération prédéterminé entre la mâchoire de frein et le disque de frein,
b) qu'ensuite le moyen de rattrapage du côté de réaction est déplacé moyennant ledit moteur M2 en un sens vers ledit disque de frein jusqu'à ce qu'une position d'arrêt soit achevée, qui est déterminée,
c) après quoi ledit moyen de rattrapage du côté de réaction est déplacé encore, moyennant ledit moteur M2, en un sens vers ledit disque de frein, en essayant en même temps d'ouvrir ledit moyen de rattrapage du côté de serrage moyennant ledit moteur M1 du côté de serrage, en concluant un cycle de serrage du frein quand cela n'est pas possible.

8. Procédé selon la revendication 7, **caractérisé en ce**
a) **que** ledit moteur M1 du côté de serrage est déplacé en un sens vers ledit disque de frein, de préférence après un cycle de réglage de ce jeu minimal d'aération audit moteur M2 du côté de réaction et dudit moyen de rattrapage du côté de réaction,
b) **que** jusqu'à l'achèvement d'une position d'arrêt, qui est déterminée, en transférant des positions d'arrêt en un sens vers l'usure plus forte, relativement à une position minimale du jeu d'aération précédente, en tant que positions d'arrêt, pendant que des positions de butée ou respectivement d'arrêt en un sens inverse sont rebutées,
c) et **que** ledit moteur M1 du côté de serrage déplace ledit moyen de rattrapage à partir de la position d'arrêt déterminée audit disque de frein dans sa position du jeu minimal d'aération.

9. Procédé selon la revendication 8, **caractérisé en ce que** le procédé à régler le jeu d'aération est répété aux intervalles prédéterminés.

10. Procédé selon une quelconque des revendications 6 à 9, **caractérisé en ce que** des cycles de serrage du frein sont conclus de l'arrêt du moteur au cas des mouvements d'ouverture à partir de ladite butée.

11. Procédé selon une quelconque des revendications 6 à 10, **caractérisé en ce que** le procédé à régler le jeu d'aération est interrompu après la détection d'un cycle de serrage du frein déjà initié, est encore répété après un intervalle de temps prédéterminé.

12. Procédé selon une quelconque des revendications 6 à 11, **caractérisé en ce que,** moyennant desdits moyens de rattrapage, les garnitures de frein sont desserrées, de manière active supplémentaire, dudit disque de frein après des cycles de serrage du frein.
